(19) Europäisches Patentamt
European Patent Office
Office européen des brevets

(11) **EP 1 923 718 A1**

(12) **EUROPEAN PATENT APPLICATION**

(43) Date of publication:
**21.05.2008 Bulletin 2008/21**

(51) Int Cl.:
*G01S 13/58* (2006.01)   *G01S 13/93* (2006.01)
*G01S 7/35* (2006.01)

(21) Application number: **07120287.3**

(22) Date of filing: **08.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **16.11.2006  JP 2006310603**

(71) Applicant: **OMRON CORPORATION**
**Kyoto-shi, Kyoto 300-8530 (JP)**

(72) Inventors:
• **Ichiyanagi, Hoshibumi**
  **c/o OMRON Corporation**
  **Kyoto-shi**
  **Kyoto 600-8530 (JP)**

• **Takenouchi, Shinya**
  **c/o OMRON Corporation**
  **Kyoto-shi**
  **Kyoto 600-8530 (JP)**
• **Ohara, Hideyuki**
  **c/o OMRON Corporation**
  **Kyoto-shi**
  **Kyoto 600-8530 (JP)**

(74) Representative: **Brykman, Georges**
  **Osha Liang**
  **121, Avenue des Champs Élysées**
  **75008 Paris (FR)**

(54) **Measuring system and method, measuring apparatus and method, and information processing apparatus and method**

(57)   A 2 frequencies CW radar measures relative speed and distance between one's own vehicle and a measurement object by using short time period sample data from a receiving signal to output a high speed measurement result in a high speed measurement mode. In parallel, the radar measures relative speed and distance between one's own vehicle and the measurement object using a long period time sample data from the receiving signal to output a low speed measurement result. High speed measurement result is used when a processing of a high response is executed and low speed measurement result otherwise. A processing operation apparatus can also correct the high speed measurement result by using the low speed measurement result. Applicable to a high response of a pre-clash system or the like.

*FIG. 8*

EP 1 923 718 A1

**Description**

BACKGROUND OF THE INVENTION

1. Field of the Invention

The present invention relates to measuring system and method, measuring apparatus and method, and information processing apparatus and method, particularly relates to measuring system and method, measuring apparatus and method, and information processing apparatus and method capable of making a high speed response and an accuracy of a measuring processing by a Doppler system compatible with each other and pertinently executing a processing at a later stage utilizing a measurement result thereof.

2. Description of Related Art

In a background art, as a sensor for measuring relative speed or distance between one's own vehicle and other vehicle, there is known a sensor of a 2 frequency CW (Continuous Wave) system (hereinafter, referred to as 2 frequency CW radar) (refer to, for example, Japanese Patent No. 3203600 and JP-A-2004-69693 (Patent References 1, 2)). That is, the 2 frequency CW radar detects a frequency (hereinafter, referred to as Doppler frequency) and a phase of a Doppler signal with regard to a signal constituted by reflecting a transmitting signal by an object and measures relative speed and distance of the other vehicle by using a detection result thereof.
An automobile (one's own vehicle) is mounted with an ACC (Adaptive Cruise Control) system capable of automatically tracking a preceding vehicle (other vehicle) while maintaining an inter-vehicle distance therebetween constant by using a sensor of such a 2 frequency CW radar or the like. Further, in recent years, there has been mounted a pre-clash system for alleviating an impact in clashing by detecting that one's own vehicle and other vehicle are going to clash with each other (pre-clashing) by using a sensor of such a 2 frequency CW radar or the like.
In this way, an automobile is mounted with a plurality of systems having different uses utilizing a signal from a sensor.
However, the 2 frequency CW radar of the background art poses a problem that it is difficult to make response speed and accuracy compatible with each other.
Therefore, for example, when the 2 frequency CW radar of the background art having such a problem is utilized in an automobile mounted with a plurality of systems of a system in which a distance accuracy is important and the pre-clash system in which the response speed is important, there poses a problem that the 2 frequency CW radar can provide only a measurement result suitable for one system.
Speaking the problem further generally, there poses a problem that according to the 2 frequency CW radar of the background art, there is a possibility that there is brought about a case in which a processing at a later stage utilizing the measurement result cannot pertinently be executed.
Further, otherwise, the problem posed by the 2 frequency CW radar of the background art is a problem posed by a total of a measuring apparatus of the background art of the system of using the Doppler signal for the signal constituted by reflecting the transmitting signal by the measuring object (hereinafter, referred to as Doppler system).

SUMMARY OF THE INVENTION

The invention has been carried out in such a situation, and by making high speed response and accuracy of a measuring processing by the Doppler system compatible, the processing at the later stage utilizing the measurement result is made to be able to be pertinently executed.
According to an aspect of the invention, there is provided a measurement system including a measuring apparatus for measuring an object by a Doppler system using a Doppler signal with regard to a reflecting signal of a transmitting signal by the object, and a processing apparatus for executing a predetermined processing by using a measurement result of the measuring apparatus, wherein the measuring apparatus executes a frequency analysis for a sample data sampled from the reflecting signal and includes a plurality of measurement modes in which sample time periods of sampling the sample data from the reflecting signal differ from each other as measurement modes for measuring the object by the Doppler system by using a result of the frequency analysis and executes respective measurement processings of the plurality of measurement modes independently from each other and in parallel with each other, and the processing apparatus executes the predetermined processing by selecting a predetermined measurement mode from the plurality of measurement modes and using the measurement result of the measuring apparatus by the selected measurement mode.
Thereby, with regard to the measuring apparatus, the high speed response and the accuracy of the measuring processing by the Doppler system can be made to be compatible with each other, and with regard to the processing apparatus, the processing at the later stage utilizing the measurement result can pertinently be executed.

For example, as the Doppler system, a 2 frequency CW (Continuous Wave) system, a monopulse system or the like can be adopted.

For example, the measuring apparatus is constituted by a 2 frequency CW radar or a monopulse type radar (including radar including functions of the two systems) or the like, and the processing apparatus is constituted by a microcomputer or the like.

According to an aspect of the invention, there is provided a measuring method of a measuring system including a measuring apparatus for measuring an object by a Doppler system using a Doppler signal with regard to a reflecting signal of a transmitting signal by the object, and a processing apparatus for executing a predetermined processing by using a measurement result of the measuring apparatus, wherein the measuring apparatus executes a frequency analysis for a sample data sampled from the reflecting signal and includes a plurality of measurement modes in which sample time periods of sampling the sample data from the reflecting signal differ from each other as measurement modes for measuring the object by the Doppler system by using a result of the frequency analysis and executes respective measurement processings of the plurality of measurement modes independently from each other and in parallel with each other, and the processing apparatus executes the predetermined processing by selecting a predetermined measurement mode from the plurality of measurement modes and using the measurement result of the measuring apparatus by the selected measurement mode.

Thereby, with regard to the measuring apparatus, the high speed response and the accuracy of the measuring processing by the Doppler system can be made to be compatible with each other, and with regard to the processing apparatus, the processing at the later stage utilizing the measurement result can pertinently be executed.

For example, as the Doppler system, a 2 frequency CW (Continuous Wave) system, a monopulse system or the like can be adopted.

For example, the measuring apparatus is constituted by a 2 frequency CW radar or a monopulse type radar (including radar including functions of the two systems) or the like, and the processing apparatus is constituted by a microcomputer or the like.

A measuring apparatus of the invention is a measuring apparatus for measuring an object by a Doppler system using a Doppler signal with regard to a reflecting signal of a transmitting signal by the object, the measuring apparatus comprising measurement processing means for executing a frequency analysis for a sample data sampled from the reflecting signal and includes a plurality of measurement modes in which sample time periods of sampling the sample data from the reflecting signal differ from each other as measurement modes for measuring the object by the Doppler system by using a result of the frequency analysis and executes respective measurement processings of the plurality of measurement modes independently from each other and in parallel with each other.

Thereby, the measuring apparatus capable of making the high speed response and the accuracy of the measuring processing by the Doppler system compatible with each other can be realized, as a result, the processing at the later stage utilizing the measurement result can pertinently be executed.

For example, as the Doppler system, a 2 frequency CW (Continuous Wave) system, a monopulse system or the like can be adopted.

For example, the measuring apparatus is constituted by a 2 frequency CW radar or a monopulse type radar (including a radar including functions of the two systems) or the like. Further, the measurement processing means is constituted by an operation control circuit or the like capable of executing FFT.

The measuring apparatus includes a first measurement mode in which the sample time period is a first time period and a second measurement mode in which the sample time period is a second time period longer than the first time period as the measurement modes.

Thereby, the measuring apparatus can be realized by a simple constitution, and therefore, at low cost.

According to an aspect of the invention, there is provided a measuring method of a measuring apparatus for measuring an object by a Doppler system using a Doppler signal with regard to a reflecting signal of a transmitting signal by the object, wherein the measuring apparatus executes a frequency analysis for a sample data sampled from the reflecting signal and includes a plurality of measurement modes in which sample time periods of sampling the sample data from the reflecting signal differ from each other as measurement modes for measuring the object by the 2 frequency CW system by using a result of the frequency analysis, and the measuring method includes a step of executing respective measuring processings of the plurality of measurement modes independently from each other and in parallel with each other.

Thereby, the measuring method capable of making the high speed response and the accuracy of the measuring processing by the Doppler system compatible with each other can be realized, as a result, the processing at the later stage utilizing the measurement result can pertinently be executed.

For example, as the Doppler system, a 2 frequency CW (Continuous Wave) system, a monopulse system or the like can be adopted.

For example, the measuring apparatus is constituted by a 2 frequency CW radar or a monopulse type radar (including a radar including functions of the two systems) or the like.

According to an aspect of the invention, there is provided an information processing apparatus for acquiring a measurement result from a measuring apparatus for detecting a Doppler frequency or an amount based thereon by executing a frequency analysis for a sample data sampled from a reflecting signal of an object for a transmitting signal, including a plurality of measurement modes in which sample time periods of sampling the sample data from the reflecting signal differ from each other as measurement modes of measuring the object by using a detection result thereof and executing respective measuring processings of the plurality of measurement modes independently from each other and in parallel with each other and executing a predetermined processing by utilizing the measurement result, wherein the predetermined processing is executed by selecting a predetermined measurement mode from the plurality of measurement modes and using the measurement result of the measuring apparatus by the selected measurement mode.

Thereby, the measurement result is acquired from the measuring apparatus capable of making the high speed response and the accuracy of the measuring processing by the system of using the Doppler signal with regard to the reflecting signal of the transmitting signal by the object, that is, by the Doppler system compatible with each other and the processing at the later stage utilizing the measurement result can pertinently be executed.

For example, as the Doppler system, a 2 frequency CW (Continuous Wave) system, a monopulse system or the like can be adopted.

For example, the measuring apparatus is constituted by a 2 frequency CW radar or a monopulse type radar (including a radar including functions of the two systems) or the like.

The information processing apparatus is constituted by, for example, a microcomputer or the like.

The measuring apparatus includes a first measurement mode in which a sample time period is a first time period and a second measurement mode in which the sample time period is a second time period longer than the first time period as the measurement modes, and wherein the information processing apparatus can utilize the measurement result of the measuring apparatus by the first measurement mode when a processing requesting a predetermined response speed is executed and can utilize the measurement result of the measuring apparatus by the second measurement mode when the other processing is executed as the predetermined processing.

Thereby, when the information processing apparatus executes a processing requesting a high speed response, for example, a processing of detecting that an object is going to clash one's own vehicle (pre-clash), the accuracy is also achieved simultaneously.

The measuring apparatus includes a first measurement mode in which a sample time period is a first time period and a second measurement mode in which the sample time period is a second time period longer than the first time period as the measurement modes, and wherein the information processing apparatus at least can execute a first processing of utilizing the measurement result of the measuring apparatus by the first measurement mode, and a second processing of correcting the measurement result of the measuring apparatus by the first measurement mode by utilizing the measurement result of the measuring apparatus by the second measurement mode as the predetermined processing.

Thereby, the information processing apparatus can execute the first processing with higher precision.

According to an aspect of the invention, there is provided an information processing method of an information processing apparatus for acquiring a measurement result from a measuring apparatus for detecting a Doppler frequency or an amount based thereon by executing a frequency analysis for a sample data sampled from a reflecting signal of an object for a transmitting signal, including a plurality of measurement modes in which sample time periods of sampling the sample data from the reflecting signal differ from each other as measurement modes for measuring the object by using a detection result thereof and executing respective measuring processings of the plurality of measurement modes independently from each other and in parallel with each other and executing a predetermined processing by utilizing the measurement result, wherein the predetermined processing is executed by selecting a predetermined measurement mode from the plurality of measurement modes and using the measurement result of the measuring apparatus by the selected measurement mode.

Thereby, the measurement result is acquired from the measuring apparatus capable of making the high speed response and the accuracy of the measuring processing by the system of using the Doppler signal with regard to the reflecting signal of the transmitting signal by the object, that is, the Doppler system compatible with each other and the processing at the later stage utilizing the measurement result can pertinently be executed.

For example, as the Doppler system, a 2 frequency CW (Continuous Wave) system, a monopulse system or the like can be adopted.

For example, the measuring apparatus is constituted by a 2 frequency CW radar or a monopulse type radar (including a radar including functions of the two systems) or the like.

The information processing apparatus is constituted by, for example, a microcomputer or the like.

As described above, according to the invention, the measuring processing by the Doppler system can be executed, further, also the processing at the later stage utilizing the measurement result can be executed. Particularly, the high speed response and the accuracy of the measuring processing by the Doppler system can be made to be compatible with each other, as a result, also the processing at the later stage utilizing the measurement result can be pertinently be executed.

BRIEF DESCRIPTION OF THE DRAWINGS

Fig. 1 is a block diagram showing a constitution example of a measurement system to which the invention is applied.

Fig. 2 is a diagram for explaining a relationship between an accuracy and a processing time period of FFT, and a frequency and a sampling time period of a sample data.

Fig. 3 is a diagram for explaining a relationship between an accuracy and a processing time period of FFT, and a frequency and a sampling time period of a sample data.

Fig. 4 is a block diagram showing a detailed constitution example of a 2 frequency CW radar of Fig. 1.

Fig. 5 is a diagram for explaining an example of a method of separating Doppler signals having two Doppler frequencies $\Delta f1$, $\Delta f2$.

Fig. 6 is a block diagram showing a detailed constitution example of an operation control portion of Fig. 4.

Fig. 7 is a timing chart for explaining a processing example of the operation control portion of Fig. 6.

Fig. 8 is a flowchart for explaining a processing example of a processing operation apparatus of Fig. 1 and Fig. 4.

Fig. 9 is a block diagram showing a constitution example of a measuring apparatus to which the invention is applied.

Fig. 10 is a block diagram showing other example of a constitution of a total or a portion of a measurement system or a measuring apparatus to which the invention is applied.

DESCRIPTION OF PREFERRED EMBODIMENTS

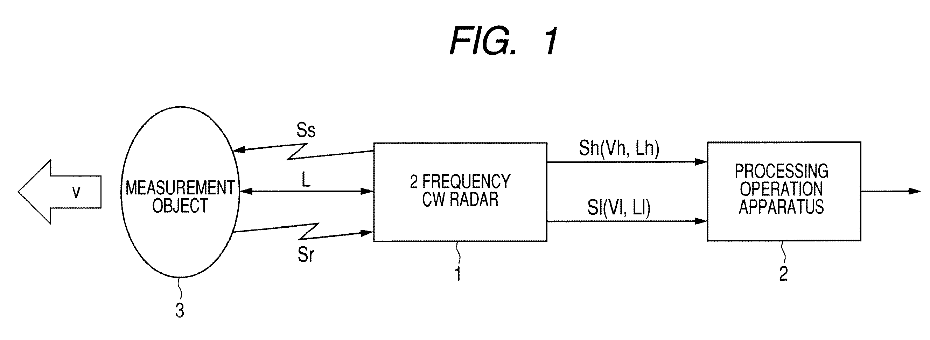

Fig. 1 shows a constitution example of one embodiment of a measuring system applied with the invention.

The measuring system of the example of Fig. 1 is constituted by a 2 frequency CW radar 1 according to an embodiment of a measuring apparatus described in claims and a processing operation apparatus 2 according to an embodiment of a processing apparatus described in claims. The processing operation apparatus 2 can be constituted by, for example, a microcomputer or the like.

The 2 frequency CW radar 1 can carry out a measurement by a 2 frequency CW system as the name implies.

Here, an outline of the measurement by the 2 frequency CW system will be explained.

The 2 frequency CW radar 1 generates a signal provided as a result of switching CW (Continuous Wave) having a frequency of f1 and CW having a frequency of f2 by time division (hereinafter, referred to as 2 frequency CW) and outputs the 2 frequency CW as a transmitting signal Ss.

The transmitting signal Ss is reflected by a measurement object 3 and the reflecting signal is received by the 2 frequency CW radar 1 as a receiving signal Sr.

At this occasion, when a relative speed v is present between the 2 frequency CW radar 1 and the measurement object 3, respectives of Doppler frequencies $\Delta f1$, $\Delta f2$ are generated for respectives of frequencies of f1, f2 of the transmitting signal Ss, as a result, the frequency of the receiving signal Sr becomes frequencies f1 + $\Delta f1$, f2 + $\Delta f2$. In other words, 2 frequency CW having 2 frequencies of f1 + $\Delta f1$, f2+$\Delta f2$ becomes a signal equivalent to the receiving signal Sr.

Hence, the 2 frequency CW radar 1 can calculate the relative speed of v of the measurement object 3 relative to the 2 frequency CW radar 1 by detecting the Doppler frequency $\Delta f1$ or $\Delta f2$ from the receiving signal Sr and operating Equation (1) or Equation (2) as follows.

$$\mathrm{v} = \mathrm{c} * \Delta \mathrm{f1}/(2*\mathrm{f1}) \ \ldots \ (1)$$

$$\mathrm{v} = \mathrm{c} * \Delta \mathrm{f2}/(2*\mathrm{f2}) \ \ldots \ (2)$$

Further, notation c designates the light speed.

Further, the 2 frequency CW radar 1 can calculate a distance L between the 2 frequency CW radar 1 and the measurement object 3 by detecting a phase $\phi1$ of the Doppler signal constituting the Doppler frequency $\Delta f1$ and a phase $\phi2$ of the Doppler signal constituting the Doppler frequency $\Delta f2$ and carrying out an operation of Equation (3) as follows.

$$\mathrm{L} \;=\; \mathrm{c} \;*\; (\phi 1 \;-\; \phi 2)/4\pi \;*\; (\mathrm{f}1 \;-\; \mathrm{f}2) \;\ldots\; (3)$$

The measurement carried out by a series of processings is the measurement by the 2 frequency CW system.

Here, an explanation will be given of a factor posing the problem provided to the 2 frequency CW radar of the background art, that is, the problem that according to the 2 frequency CW radar of the background art, it is difficult to make response speed and accuracy compatible with each other as described in "Problems that the Invention is to Solve".

As described above, according to the 2 frequency CW system, it is necessary to detect the Doppler frequencies $\Delta$f1, $\Delta$f2 and the phases $\phi$1, $\phi$2 in correspondence therewith. The detection is realized by carrying out frequency analyzing processing, for example, FFT (Fast Fourier Transform) analyzing processing (hereinafter, simply referred to as FFT) for the corresponding Doppler signal.

One factor of determining an accuracy of FFT is a data amount of a waveform constituting an object of FFT (hereinafter, referred to as a processing object waveform) (number of pieces of waves in view of an analog waveform) . That is, it is known that the larger the data amount of the processing object waveform, the more excellent the accuracy of FFT. In other words, it is known that the smaller the data amount of the processing object waveform, the more deteriorated the accuracy of FFT. Specifically, for example, in order to achieve a reliable result, in view from an experimental rule, at least 10 periods of the data amount (10 pieces of waves in view of the analog waveform) is needed.

Here, when the frequency of the processing object waveform is designated by notation f and sample time of sampling data utilized in one time FFT from the processing object waveform is designated by notation t, the data amount of the processing object waveform utilized in FFT becomes f*t period (f*t pieces of waves).

In this case, processing time (response time) of one time FFT is time of sampling time t added with operating time for carrying out an operation or the like by using the data sampled during an interval of the sampling time t. However, the operating time per se can be regarded as substantially constant time regardless of long or short of the sampling time t, and therefore, the following explanation will be given by paying attention only to the sampling time t. In other words, that the sampling time t is constant signifies that also the processing time of FFT is constant and that the sampling time t is long/short signifies that also the processing time of FFT is long/short.

That is, when the sampling time t is constant, the higher the frequency f of the processing object waveform, the more increased the sample data amount (number of pieces of waves) from the processing object waveform, as a result, the more excellent the accuracy of FFT. Conversely, the lower the frequency f of the processing object waveform, the more reduced the sample data amount (number of pieces of waves) from the processing object waveform, as a result, the more deteriorated the accuracy of FFT.

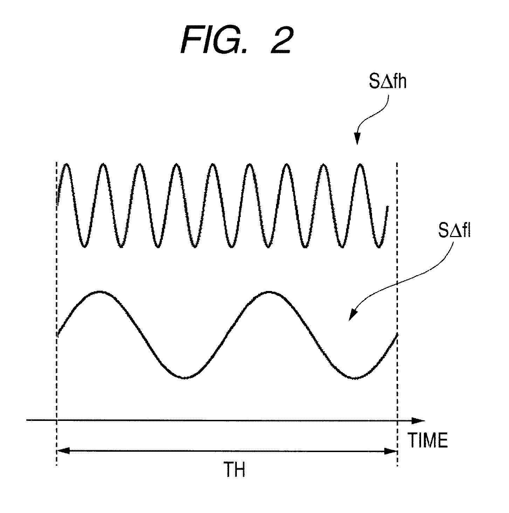

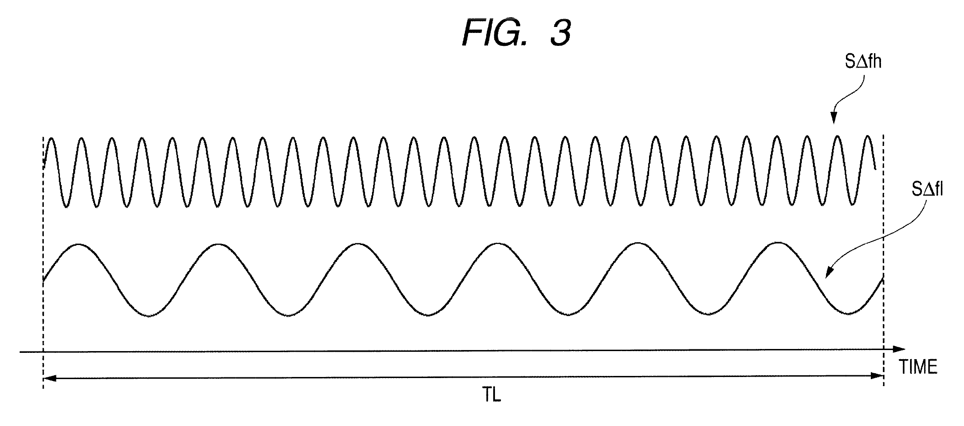

Specifically, for example, as shown by Fig. 2, assume that sampling time t = TH, a Doppler signal S$\Delta$fh having a frequency of fh and a Doppler signal S$\Delta$fl of a frequency f1 lower than the frequency fh constitute the processing object waveform. In this case, as is apparent from Fig. 2, it is known that a number of pieces of waves (sample data amount) in sampling time TH is larger in the Doppler signal S$\Delta$fh than in the Doppler signal S$\Delta$fl. This stays the same even when the sampling time t is changed. For example, as shown by Fig. 3, even when sampling time t = TL, a number of pieces of waves (sample data amount) in sampling time TL is larger in the Doppler signal S$\Delta$fh than in the Doppler signal S$\Delta$fl. Therefore, in cases of examples of Fig. 2 and Fig. 3, when the sampling time t stays the same, an accuracy of FFT utilizing sample data from the Doppler signal S$\Delta$fh is higher than the accuracy of FFT utilizing sample data from the Doppler signal S$\Delta$fl.

Further, when the frequency f of the processing object waveform is constant, the longer the sampling time t, the more increased the sample data amount (number of pieces of waves) from the processing object waveform, as a result, the more excellent the accuracy of FFT. Conversely, the shorter the sampling time t, the more reduced the sample data amount (number of pieces of waves) from the processing object waveform, as a result, the more deteriorated the accuracy of FFT.

Specifically, for example, as is apparent from Fig. 2 and Fig. 3 described above, when the Doppler signal S$\Delta$fh having the frequency of fh constitutes the processing object waveform, it is known that a number of pieces of waves (sample data amount) included in the sampling time TL of long time is larger than a number of pieces of waves (sample data amount) included in the sampling time TH in short time. This stays the same even when the frequency f of the processing object waveform is changed. For example, as is apparent from Fig. 2 and Fig. 3, even when the Doppler signal S$\Delta$fl having the frequency of fl constitutes the processing object waveform, similarly, a number of pieces of waves (sample data amount) included in the sampling time TL of long time is larger than a number of pieces of waves (sample data amount) included in the sampling time TH of short time. Therefore, in cases of examples of Fig. 2 and Fig. 3, when the frequency f of the processing object waveform stays the same, an accuracy of FFT utilizing the sample data of the sample time TL of the long time becomes higher than the accuracy of FFT utilizing the sample data of the sample time TH of the short time.

Meanwhile, according to FFT in the 2 frequency CW system, as described above, the Doppler frequencies $\Delta$f1,

Δf2 constitute the frequency f of the processing object waveform. The Doppler frequencies Δf1, Δf2 are proportional to the relative speed v of the measurement object as is apparent from Equations (1), (2) mentioned above.

Therefore, the lower the relative speed v of the measurement object, also the lower the Doppler frequencies Δf1, Δf2, and in order to increase the accuracy of FFT, it is necessary to prolong the processing time of FFT, that is, prolong the sampling time t. Prolonging the processing time FFT signifies that the response speed of the measuring processing (measuring processing of relative speed v, distance L or the like) of the 2 frequency CW system is retarded, and therefore, the response speed of a total of a system utilizing a result of the measuring processing, for example, a total of a so-to-speak pre-clash system is retarded.

In this way, according to the 2 frequency CW system, in view of a principle thereof, there is present a conflicting relationship between the accuracy and the response speed such that when one thereof is intended to improve, other thereof is deteriorated. This is the factor of posing the problem that according to the 2 frequency CW radar of the background art, it is difficult to make the response speed and the accuracy compatible with each other.

Therefore, when the 2 frequency CW radar of the background art posing the problem is going to be applied to a system requesting the high speed response such as the pre-clash system, it is necessary to constitute also the 2 frequency CW radar of the background art to carry out the high speed response. That is, it is necessary to constitute the 2 frequency CW radar of the background art such that the processing time (sampling time t) of FFT becomes short time. However, there also poses a problem that the accuracy of the measurement result of the 2 frequency CW radar of the background art is deteriorated by that amount, in the worst case, even an accuracy necessary for the system cannot be achieved. Further, when there is also mounted a system needing a distance accuracy of the ACC system or the like mentioned above, the problem becomes further serious.

Hence, the inventors have invented the following method in order to resolve the problems.

That is, a method invented by the inventors is a method in which as measurement modes for carrying out measuring processings of relative speed or distance by the 2 frequency CW system, there are provided a plurality of measurement modes in which processing time periods of FFT differ from each other, that is, a plurality of measuring modes in which sampling time periods t of sampling data from processing object waveforms (Doppler signals of Doppler frequencies Δf1, Δf2) of FFT differ from each other, and respective measuring processings of the plurality of measurement modes are executed independently from each other and in parallel with each other (hereinafter, referred to as plural FFT mode method).

In this case, response speeds and accuracies of the plurality of measurement modes depend on the respective processing time periods of FFT. That is, a measurement mode having a short processing time period of FFT is characterized in that although the response speed is high, the accuracy is low. On the other hand, a measurement mode having a long processing time period of FFT is characterized in that although the response speed is low, the accuracy is high. Therefore, in a processing at a later stage of utilizing results of the measuring processings of the 2 frequency CW system, by selecting a pertinent measurement mode from the plurality of measurement modes in consideration of a balance between the response speed and the accuracy required for the processing at the later stage, the result of the measuring processing of the measuring mode can be utilized.

In this way, by applying the plural FFT mode method of the invention, in the measuring processing of the relative speed or distance by the 2 frequency CW system, the response speed and the accuracy can be made to be compatible with each other. That is, the problems provided to the 2 frequencies CW radar of the background art can be resolved.

Specifically, for example, when the plural FFT mode method is applied to a system executing one or more of processings requiring high speed responses (hereinafter, referred to as high speed processing), that is, a pre-clash system of executing a processing of detecting that a measurement object is going to clash one's own vehicle (pre-clash) as high speed processing, a first measurement mode and a second measurement mode may be provided as measurement modes as follows. The first measurement mode refers to a measurement mode of executing a measuring processing from a sample data in a short period of time, that is, a measurement mode having a short processing time period of FFT. On the other hand, the second measurement mode refers to a measurement mode of executing a measuring processing from a sample data of a long period of time, that is, a measurement mode having a long processing time period of FFT.

Hereinafter, the first measurement mode is referred to as high speed measurement mode and the second measurement mode is referred to as low speed measurement mode. Further, a method of utilizing the high speed measurement mode and the low speed measurement mode in the plural FFT mode method is referred to as high speed/low speed FFT mode method as follows.

An example of the 2 frequency CW radar applied with the high speed/low speed FFT mode method is the 2 frequency CW radar 1 of Fig. 1.

That is, the 2 frequency CW radar 1 executes a series of processings of measuring a relative speed Vh and a distance Lh of the measurement object 3 by using a short time period sample data from the receiving signal Sr and generating and outputting a signal Sh including these (hereinafter, referred to as high speed measurement result Sh) as a measuring processing of the high speed measurement mode. In parallel with the measurement processing of the high speed mode, the 2 frequency CW radar 1 executes a series of processings for measuring a relative speed Vl and a distance Ll of the measurement object 3 by using long period time sample data from the receiving signal Sr and generating and outputting a signal Sl including these (hereinafter, referred to as low speed measurement result Sl) as a measuring processing of a low speed measurement mode.

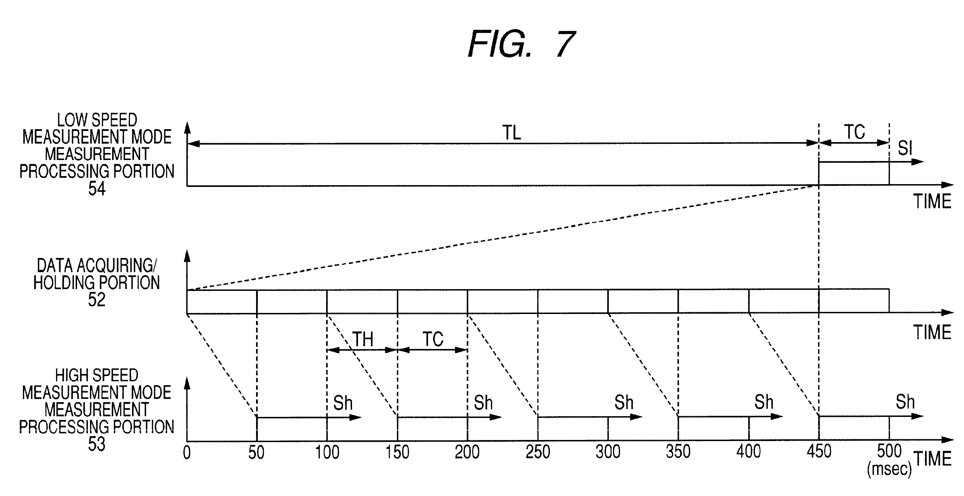

As shown by Fig. 1, the high speed measurement result Sh and the low speed measurement result Sl are provided to the processing operation apparatus 2. However, the high speed measurement result Sh and the low speed measurement result Sl are not necessarily provided to the processing operation apparatus 2 simultaneously, but at each time of the measuring processing of the high speed measurement mode, the high speed measurement result Sh is provided to the processing operation apparatus 2 at each time, further, at each time of the measurement processing of the low speed measurement mode, the low speed measurement result Sl is provided to the processing operation apparatus 2 at each time independently from each other. That is, although details thereof will be described later in reference to Fig. 7, during a time period of providing one of the low speed measurement result Sl is provided to the processing operation apparatus 2, more (five in an example of Fig. 7) of the high speed measurement results Sh are provided to the processing operation apparatus 2.

Therefore, whereas the processing operation apparatus 2 executes the high speed processing by using the high speed measurement result Sh, the processing operation apparatus 2 can execute a processing of correcting the high speed measurement result Sh, or a processing for providing information of the measurement object 3 having the low relative speed v by using the low speed measurement result Sl.

Further, according to the measurement object 3 having the low relative speed v, also a change in the relative position (a change in the distance L) is comparatively small, and therefore, even when the response speed of the system (2 frequency CW radar 1 and the processing operation apparatus 2) is slow, a problem is not posed so much. For example, when the system of Fig. 1 is a pre-clash system, the lower the relative speed v of the measurement object 3, that is, the smaller the change in the relative position, the lower the possibility of clashing the measurement object 3. Therefore, for example, the processing operation apparatus 2 can execute a predetermined processing of monitoring the measurement object 3 by utilizing the low speed measurement result Sl until the relative speed v becomes equal to or larger than a constant threshold and can execute the high speed processing of detecting presence/absence of pre-clash by utilizing the high speed measurement result Sh when the relative speed v becomes equal to or larger than the threshold. Further, the processing operation apparatus 2 can correct the high speed measurement result Sh by utilizing the low speed measurement result Sl pertinently in executing the high speed processing. Further, a correction mentioned here includes also a processing of executing the high speed processing by utilizing the low speed measurement result Sl as it is in place of the high speed measurement result Sh.

Or, the longer the distance to the measurement object 3, the lower the possibility of clashing the measurement object 3. Therefore, for example, the processing operation apparatus 2 can execute the predetermined processing of monitoring the measurement object 3 by utilizing the low speed measurement result Sl until the distance L becomes equal to or smaller than the constant threshold and can execute the high speed processing of detecting presence/absence of pre-clash by utilizing the high speed measurement result Sh when the distance L becomes equal to or smaller than the threshold.

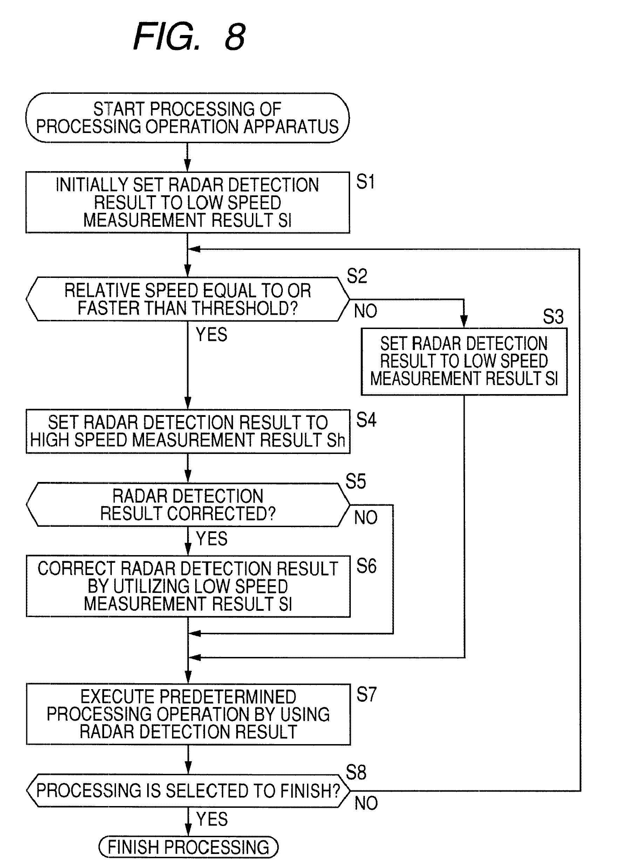

Further, details of a series of processing examples of the processing operation apparatus 2 mentioned above will be described later in reference to a flowchart of Fig. 8.

As explained above, by applying the system of Fig. 1 to the pre-clash system, there can be resolved the above-described problem which is posed in the pre-clash system of the background art constituted by the 2 frequency CW radar of the background art.

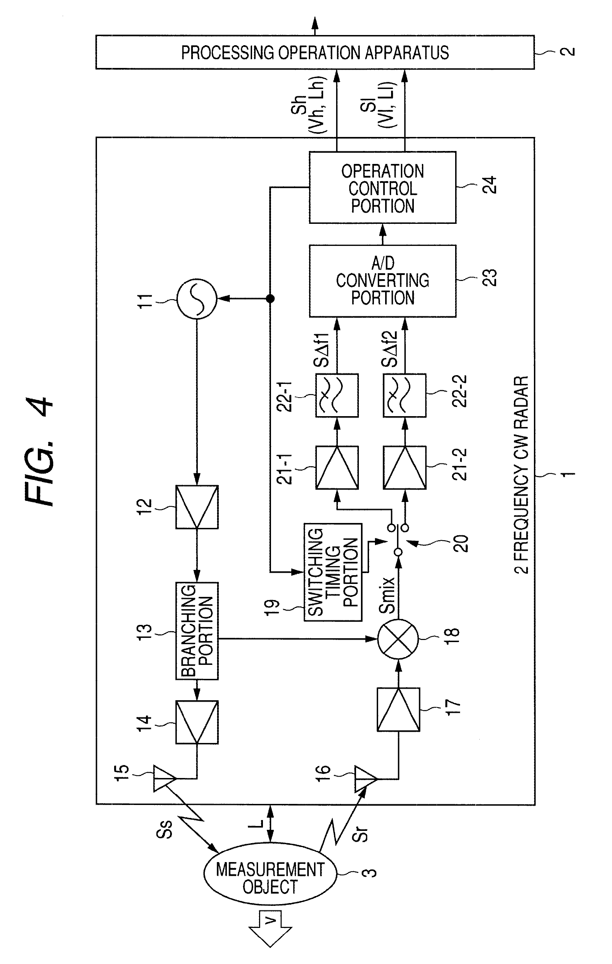

Fig. 4 is a block diagram showing a constitution example of the 2 frequency CW radar 1 applied with the high speed/low speed FFT mode method of the invention.

The 2 frequency CW radar 1 of the example of Fig. 4 is constituted to include an oscillating portion 11 through an operation control portion 24.

The oscillating portion 11 alternately switches to oscillate CW of the frequency f1 and CW of the frequency f2 based on a control of the operation control portion 24. That is, CWs of 2 frequencies having the frequencies f1, f2 are outputted from the oscillating portion 11 to provide to an amplifying portion 12.

The amplifying portion 12 subjects the 2 frequency CWs to various processings of an amplifying processing or the like to provide to a branching portion 13.

The branching portion 13 provides the 2 frequency CWs from the amplifying portion 12, that is, the 2 frequency CWs having the frequencies f1, f2 to provide to respectives of an amplifying portion 14 and a mixing portion 18.

The amplifying portion 14 subjects the 2 frequency CWs from the branching portion 13, that is, the 2 frequency CWs having the frequencies f1, f2 to various processings of an amplifying processing or the like and provides a signal provided as a result to an antenna portion 15 as an output signal. An output signal of the amplifying portion 14 is outputted from the antenna portion 15 in a mode of a radio wave as the transmitting signal Ss.

Further, the 2 frequency CW is outputted from the antenna portion 15 as the transmitting signal Ss after having been modulated by a predetermined modulating system as necessary. The modulating processing is executed by, for example, the amplifying portion 14.

The transmitting signal Ss is reflected by the measurement object 3 and a reflecting signal thereof is received by an antenna portion 16 as the receiving signal Sr.

Further, although an example of Fig. 4, the antenna portion 15 for transmitting and the antenna portion 16 for receiving are separately provided, one antenna portion serving also as a transmitting portion and a receiving portion may be provided.

An amplifying portion 17 subjects the receiving signal Sr received by the antenna portion 16 pertinently to various processings of an amplifying processing or the like and provides 2 frequency CWs provided as a result thereof to a mixing portion 18 as an output signal. Further, when the amplifying portion 14 executes the modulating processing, the amplifying portion 17 executes a demodulating processing in correspondence with the modulating processing in order to provide the 2 frequency CWs.

The 2 frequency CWs outputted from the amplifying portion 17, that is, the 2 frequency CWs provided from the receiving signal Sr are provided with a frequency of f1 + Δf1 and a frequency f2 + Δf2 as described above. That is, from the amplifying portion 17, as if CW having the frequency of f1 + Δf1 and CW of the frequency f2 + Δf2 were alternately switched by time division to be successively outputted.

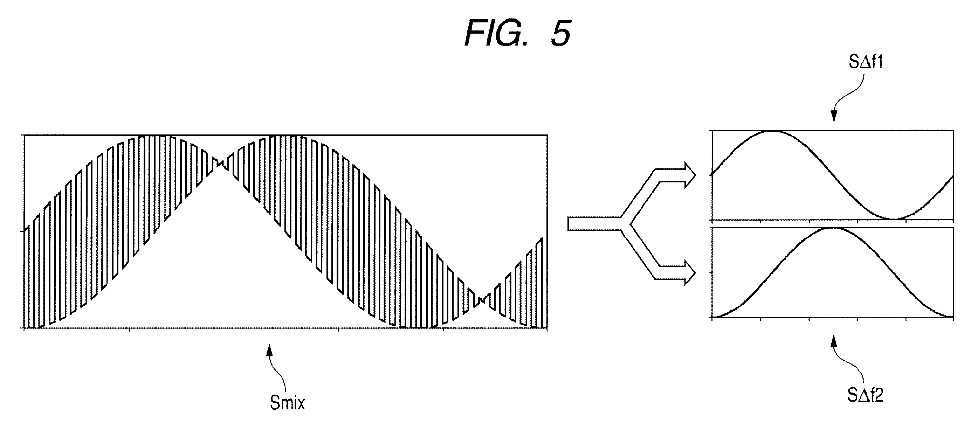

The mixing portion 18 mixes the 2 frequency CWs (2 frequency CWs having frequencies of f1 + Δf1, f2 + Δf2) outputted from the amplifying portion 17 and the 2 frequency CWs (2 frequency CWs having frequencies f1, f2) outputted from the branching portion 13 and outputs a mix signal Smix provided as a result, specifically, a mix signal Smix having a waveform as shown by, for example, Fig. 5 to a switching portion 20.

The switching portion 20 switches a destination of the output from one to other of an amplifying portion 21-1 and an amplifying portion 21-2 based on a control of a switching timing portion 19. That is, the switching timing portion 19 monitors switching timings of oscillation frequencies f1, f2 of the oscillating portion 11 by the operation control portion 24, switches the destination of the output of the switching portion 20 to a side of the amplifying portion 21-1 at a timing of switching the frequency from f2 to f1 and switches the destination of the output of the switching portion 20 to a side of the amplifying portion 21-2 at a timing of switching the frequency f1 to f2.

That is, a signal outputted from the mixing portion 18 during a time period in which the oscillating portion 11 oscillates CW of the frequency f1 of the mix signal Smix is provided to the amplifying portion 21-1 by way of the switching portion 20 to be pertinently subjected to various processings of an amplifying processing or the like, further, removed of a high region component (noise or the like) by a low pas filter portion 22-1 and thereafter provided to an A/D converting portion 23 as a signal SΔf1. The signal SΔf1 is a Doppler signal having a Doppler frequency of Δf1.

On the other hand, a signal outputted from the mixing portion 18 during a time period in which the oscillating portion 11 oscillates CW of the frequency f2 of the mix signal Smix is provided to the amplifying portion 21-2 by way of the switching portion 20 to be pertinently subjected to various processings of an amplifying processing or the like, further, removed of the high region component (noise or the like) by a low pas filter portion 22-2 and thereafter provided to the A/D converting portion 23 as a signal SΔf2. The signal SΔf2 is a Doppler signal having a Doppler frequency of Δf2.

That is, as shown by Fig. 5, the mix signal Smix outputted from the mixing portion 18 is separated to respectives of the Doppler signal SΔf1 having the Doppler frequency of Δf1 and the Doppler signal SΔf2 having the Doppler frequency of Δf2 by the switching timing portion 19 through the low pass filter portion 22-2 to be respectively provided to the A/D converting portion 23.

The A/D converting portion 23 subjects respectives of the Doppler signal SΔf1 having the Doppler frequency of Δf1 and the Doppler signal SΔf2 having the Doppler frequency of Δf2 to A/D conversion (Analog to Digital conversion) processing and provides respectives of the Doppler signal SΔf1 and the Doppler signal SΔf2 in digital provided as a result thereof to the operation control portion 24.

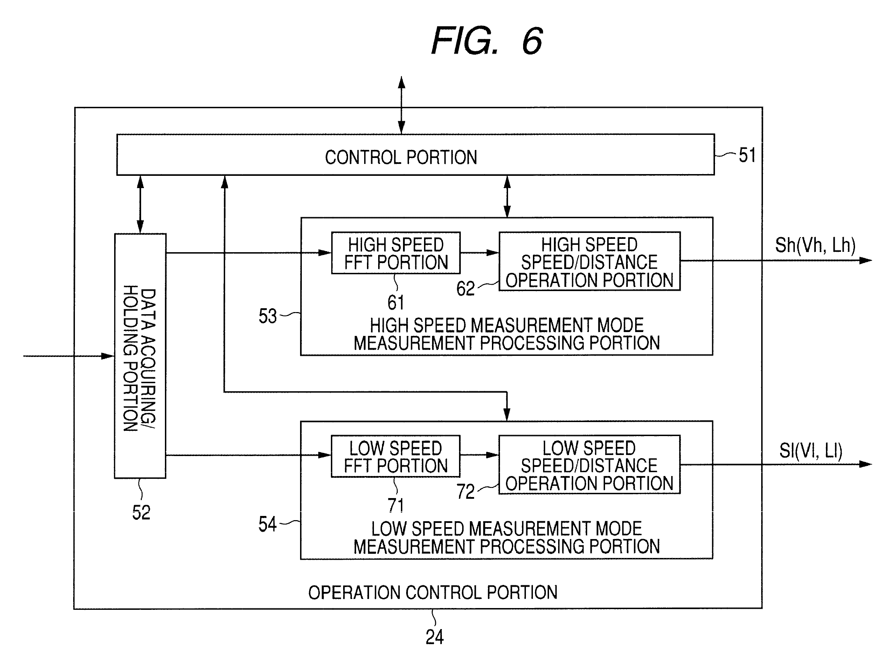

Fig. 6 shows a detailed constitution example of the operation control portion 24. In an example of Fig. 6, the operation control portion 24 is constituted to include a control portion 51 to a low speed measurement mode measurement processing portion 54.

The control portion 51 executes a control of inside of the operation control portion 24 as well as a control of a total of the 2 frequency CW radar 1, for example, as described above, a control of switching the frequencies of CWs oscillated by the oscillating portion 11 from one to other of f1 and f2 or the like.

A data acquiring/holding portion 52 individually acquires to hold respectives of the Doppler signal SΔf1 having the Doppler frequency of Δf1 and the Doppler signal SΔf2 having the Doppler frequency of Δf2 which are successively provided from the A/D converting portion 23 in a mode of a digital data. Further, an amount of holding the data at the data acquiring/holding portion 52 is not particularly limited so far as the amount is equal to or larger than an amount of a data necessary for executing a measuring processing at one time of the low speed measurement mode measurement processing portion 54 mentioned later.

A high speed measurement mode measurement processing portion 53 executes a measuring processing by the above-described high speed measurement mode and outputs the high speed measurement result Sh provided as a result thereof. Therefore, the high speed measurement mode measurement processing portion 53 is provided with a high speed FFT portion 61 and a high speed speed/distance operation portion 62. However, an explanation of the high speed FFT portion 61 and the high speed speed/distance operation portion 62 will be omitted here and the explanation will be given when the operation of the operation control portion 24 is explained as described later in accordance therewith.

On the other hand, the low speed measurement mode measurement processing portion 54 executes a measuring processing by the low speed measurement mode mentioned above and outputs the low speed measurement result Sl provided as a result thereof. Therefore, the low speed measurement mode measurement processing portion 54 is provided with a low speed FFT portion 71 and a low speed speed/distance operation portion 72. However, an explanation of the low speed FFT portion 71 and the low speed speed/distance operation portion 72 will be omitted here and the explanation will be given when the operation of the operation control portion 24 is explained as described later in accordance therewith.

Next, an example of operation of the 2 frequency CW radar 1 of Fig. 4 will be explained.

However, an operation executed by the oscillating portion 11 to the A/D conversion portion 23 is basically similar to that of operation of the background art, further, can easily be understood by referring to the explanation of the constitution of the oscillating portion 11 through the A/D converting portion 23 mentioned above, and therefore, the explanation will be omitted here.

Hence, an explanation will be given of an example of operation of the operation control portion 24 having the constitution of Fig. 6 in the 2 frequency CW radar 1 in reference to Fig. 7.

Fig. 7 respectively shows a timing chart of the low speed measurement mode measurement processing portion 54, a timing chart of the data acquiring/holding portion 52, and a timing chart of the high speed measurement mode measurement processing portion 53 successively from above.

In the timing chart of the low speed measurement mode measurement processing portion 54, a pulse signifies that the measurement processing, that is, FFT using a sample data and an operation processing of the distance or the like using the result are being executed during the time period, further, an arrow mark on a right side of the pulse signifies that the low speed measurement result Sl is outputted. Similarly, in the timing chart of the high speed measurement mode measurement processing portion 53, a pulse signifies that the measurement processing, that is, FFT using the sample data and the operation processing of the distance or the like using the result are being executed during the time period, further, an arrow mark on a right side of the pulse signifies that the high speed measurement result Sh is outputted.

Further, in the example of Fig. 7, both of the processing time period (operation time period) of the measurement processing of the low speed measurement mode measurement processing portion 54 and the processing time period (operation time period) of the measurement processing of the high speed measurement mode measurement processing portion 53 are constituted by TC (= 50 msec).

On the other hand, the timing chart of the data acquiring/holding portion 52 is illustrated with data per se acquired and held at respective timings, that is, respective data per se of the Doppler signal S$\Delta$f1 having the Doppler frequency $\Delta$f1 and the Doppler signal S$\Delta$f2 having the Doppler frequency $\Delta$f2.

In the example of Fig. 7, the low speed measurement mode measurement processing portion 54 executes 1 time of the measurement processing by utilizing the data held by the data acquiring/holding portion 52 during a time period of TL (= 450 msec) and outputs the low speed measurement result Sl provided as result.

That is, the sample time period t of the low speed measurement result Sl is constituted by the time period TL (= 450 msec) . Therefore, a total of the processing time period (response time period) of the low speed measurement mode measurement processing portion 54 is constituted by a summed up time period TL + TC (= 500 msec) of the sampling time period TL (= 450 msec) and the measuring processing time period (operation time period) TC (=50 msec).

An example of the measurement processing by the low speed measurement mode will be explained in details as follows.

First, the low speed FFT portion 71 samples data held by the data acquiring/holding portion 52 during the sampling time period TL. That is, the low speed FFT portion 71 samples of an amount of respective data of the Doppler signal S$\Delta$f1 having the Doppler frequency $\Delta$f1 and the Doppler signal S$\Delta$f2 having the Doppler frequency $\Delta$f2 which are acquired and held by the data acquiring/holding portion 52 during the sampling time period TL immediately therebefore.

Then, the following measurement processing is executed by the low speed FFT portion 71 and the low speed speed/distance operation portion 72 during the time period of the measurement processing time period (operation time period) TC.

That is, the low speed FFT portion 71 detects the Doppler frequency $\Delta$f1 and the phase $\phi$1 and detects the Doppler frequency $\Delta$f2 and the phase $\phi$2 by subjecting the sample data (respective data of the Doppler signal S$\Delta$f1 and the Doppler signal S$\Delta$f2 of the amount of the sampling time period TL) to, for example, FFT (Fast Fourier Transform) analyzing processing or the like to respectively provide to the low speed speed/distance operation portion 72.

The low speed speed/distance operation portion 72 operates Equation (1) mentioned above by using the Doppler frequency $\Delta$f1 from the low speed FFT portion 71, or operates Equation (2) mentioned above by using the Doppler frequency $\Delta$f2 from the low speed FFT portion 71 and constitutes the relative speed Vl of the measurement object 3 by a result of the operation.

Further, the low speed speed/distance operation portion 72 calculates a difference between the phase φ1 and the phase φ2 from the low speed FFT portion 71, that is, a phase difference φ1 - φ2, operates Equation (3) mentioned above by using the phase difference φ1 - φ2 and constitutes the distance Ll of the measurement object 3 by a result of the operation.

Further, the low speed speed/distance operation portion 72 generates and outputs the low speed measurement result Sl including the relative speed Vl and the distance Ll.

That is, a series of the measuring processings up to here are carried out within the measurement processing time period TC.

In contrast thereto, the high speed measurement mode measuring processing portion 53 executes 1 time of the measuring processing by utilizing data held by the data acquiring/holding portion 52 during a time period of the time period TH (= 50 msec) shorter than the time period TL (= 450 msec) and outputs the high speed measurement result Sh provided as a result.

That is, the sample time period t of the high speed measurement result Sh is constituted by the time period TH (= 50 msec). Therefore, a total of the processing time period (response time period) of the high speed measurement mode measurement processing portion 53 is constituted by a summed up time period TH + TC (= 100 msec) of the sample time period TH (= 50 msec) and the measurement processing time period (operation time period) TC (= 50 msec).

An example of the measurement processing by the high speed measurement mode will be explained in details as follows.

First, the high speed FFT portion 61 samples data held by the data acquiring/holding portion 52 during the time period of the sample time period TH. That is, the high speed FFT portion 61 samples data of an amount of respective data of the Doppler signal SΔf1 having the Doppler frequency Δf1 and the Doppler signal SΔf2 having the Doppler frequency Δf2 which are acquired and held by the data acquiring/holding portion 52 during the time period of the sample time period TH immediately therebefore.

Then, the measurement processing is executed by high speed FFT portion 61 and the high speed speed/distance operation portion 62 as follows during the time period of the measurement processing time period (operation time period) TC.

That is, the high speed FFT portion 61 detects the Doppler frequency Δf1 and the phase φ1 and detects the Doppler frequency Δf2 and the phase φ2 by subjecting the sample data (respective data of the Doppler signal SΔf1 and the Doppler signal SΔf2 of the amount of the sampling time period TH) to, for example, FFT analyzing processing or the like to respectively provide to the high speed speed/distance operation portion 62.

The high speed speed/distance operation portion 62 operates Equation (1) mentioned above by using the Doppler frequency Δf1 from the high speed FFT portion 61, or operates Equation (2) mentioned above by using the Doppler frequency Δf2 from the high speed FFT portion 61 and constitutes the relative speed Vh of the measurement object 3 by a result of the operation.

Further, the high speed speed/distance operation portion 62 calculates a difference between the phase φ1 and the phase φ2 from the high speed FFT portion 61, that is, a phase difference φ1 - φ2, operates Equation (3) mentioned above by using the phase difference φ1 - φ2 and constitutes the distance Lh of the measurement object 3 by a result of the operation.

Further, the high speed speed/distance operation portion 62 generates the high speed measurement result Sh including the relative speed Vh and the distance Lh to output.

That is, the series of the measuring processings up to here is carried out within the measurement processing time period TC.

Here, when the low speed measurement mode and the high speed measurement mode are compared, as described above, in the example of Fig. 7, the sample time period TL + the measurement processing time period (operation time period) TC (= 500 msec) are made to constitute the response time period (processing time period) of the low speed measurement mode. On the other hand, the sample time period TH + the measurement processing time period (operation time period) TC (= 100 msec) are made to constitute the response time period (processing time period) of the high speed measurement mode.

Therefore, the response speed of the high speed measurement mode is 5 time as fast as the response speed of the low speed measurement mode. That is, during a time period of outputting the low speed measurement result Sl by 1 time, the high speed measurement result Sh is outputted by 5 times.

On the other hand, FFT in the low speed measurement mode can use the sample data of the time period 9 times as long as that of FFT in the high speed measurement mode. This can easily be know by comparing Fig. 2 and Fig. 3 by constituting data held by the data acquiring/holding portion 52 by the Doppler signal SΔfh and the Doppler signal SΔfl of Fig. 2 and Fig. 3 mentioned above. Therefore, an accuracy of the low speed measurement result Sl in the low speed measurement mode is more excellent than that of the high speed measurement result Sh in the high speed measurement mode.

Thereby, when a processing utilizing the measurement result of the 2 frequency CW system is executed, the processing operation apparatus 2 of Fig. 4 selects a preferable one of the low speed measurement result Sl and high speed measurement result Sh in consideration of a balance between the response speed and accuracy requested for the processing and can utilize the measurement result of the selected one.

That is, the processing executed the processing operation apparatus 2 is not particularly limited so far as the processing is a processing utilizing a measurement processing result (hereinafter, referred to as radar detection result) of the 2 frequency CW system. Here, an explanation will be given of an example of a processing of the processing operation apparatus 2 preferable when the system of Fig. 1 is applied to a system of executing one or more of high speed processings, for example, a pre-clash system with reference to the flowchart of Fig. 8.

At step Sl, the processing operation apparatus 2 initially sets the radar detection result to the low speed measurement result Sl.

Further, "initially set to the low speed measurement result Sl" signifies that the low speed measurement result Sl is temporarily selected since selection of the radar detection result used in a predetermined processing operation at step S7 mentioned later is not executed. Therefore, as the processing at step Sl, the processing operation apparatus 2 may initially set the radar detection result to the high speed measurement result Sh.

At step S2, the processing operation apparatus 2 determines whether the relative speed is equal to or faster than a threshold. Here, the relative speed signifies the relative speed v of the measurement object 3. Further accurately, when the low speed measurement result Sl is set as the radar detection result, the relative speed Vl which is a measurement value of the low speed measurement mode is the relative speed mentioned at step S2. Further, when the high speed measurement result Sh is set as the radar detection result, the relative speed Vh which is a measurement value of the high speed measurement mode is the relative speed mentioned at step S2.

At step S2, when it is determined that the relative speed is less than the threshold, the processing proceeds to step S3. At step S3, the processing operation apparatus 2 sets the radar detection result to the low speed measurement result Sl. Thereby, the processing proceeds to step S7.

Further, "set to the low speed measurement result Sl" signifies that the low speed measurement result Sl is selected as the radar detection result used in the predetermined processing operation at step S7 mentioned later. Further, "set to the low speed measurement result Sl" includes not only that setting is changed from the high speed measurement result Sh to the low speed measurement result Sl but also that setting of the low speed measurement result Sl is maintained.

In contrast thereto, at step S2, when it is determined that the relative speed is equal to or faster than the threshold, the processing proceeds to step S4. At step S4, the processing operation apparatus 2 sets the radar detection result to the high speed measurement result Sh.

Further, "set to the high speed measurement result Sh" signifies that the high speed measurement result Sh is selected as the radar detection result used in the predetermined processing operation at step S7 mentioned later. Further, "set to the high speed measurement result Sh" includes not only that setting is changed from the low speed measurement result Sl to the high speed measurement result Sh but also that setting of the high speed measurement result Sh is maintained.

At step S5, the processing operation apparatus 2 determines whether the radar detection result is corrected.

A determining condition at step S5 is not particularly limited but specifically, for example, the condition may be constituted by that a new one of the low speed measurement result Sl is inputted from the 2 frequency CW radar 1 to the processing operation apparatus 2, or the condition may be constituted by that a predetermined time period has elapsed.

When it is determined that the radar detection result is corrected at step S5, the processing operation apparatus 2 corrects the radar detection result by utilizing the low speed measurement result Sl at step S6. Thereby, the processing proceeds to step S7.

Further, "the radar detection result is corrected by utilizing the low speed measurement result Sl" signifies that the high speed measurement result Sh acquired as the radar detection result used in the predetermined processing operation at step S7 mentioned later is corrected by using the low speed measurement result Sl acquired immediately therebefore. Further, as described above, "the radar detection result is corrected by utilizing the low speed measurement result Sl" includes that the low speed measurement result Sl is adopted in place of the high speed measurement result Sh as the radar detection result used in the predetermined processing operation at step S7 mentioned later.

In contrast thereto, at step S5, when it is determined that the radar detection result is not corrected, the processing at step S6 is not executed, that is, the correction is not executed but the processing proceeds to step S7.

At step S7, the processing operation apparatus 2 executes the predetermined processing operation by using the radar detection result.

"Execute the predetermined processing operation by using the radar detection result" mentioned here includes that the same processing operation is executed when the high speed measurement result Sh is set as the radar detection result and when the low speed measurement result Sl is set as the radar detection result as well as that processing operations different from each other are executed when the high speed measurement result Sh is set as the radar detection result and when the low speed measurement result Sl is set as the radar detection result.

For example, as an example of the latter, as described above, the high speed processing of detecting presence/absence of pre-clash or the like is an example of the predetermined processing operation when the high speed measurement result Sh is set as the radar detection result. On the other hand, a processing for providing information of the measurement object 3 having the low relative speed v, specifically, a processing of monitoring the measurement object 3 in, for example, a pre-clash system or the like is an example of the predetermined processing operation when the low speed measurement result Sl is set as the radar detection result.

When the processing at step S7 has been finished, the processing proceeds to step S8. At step S8, the processing operation apparatus 2 determines whether the processing is instructed to finish.

At step S8, when it is determined that the processing is not instructed to finish yet, the processing returns to step S2 and the processing thereafter is repeated.

In contrast thereto, at step S8, when it is determined that the processing is instructed to finish, the processing of the processing operation apparatus 2 is finished.

As other embodiment, for example, at step S2, the processing operation apparatus 2 may determine whether the distance is equal to or shorter than a threshold. Here, the distance signifies the distance L between the measurement object 3 and the radar. Further accurately, when the low speed measurement result Sl is set as the radar detection result, the distance Ll constituting a measurement value of the low speed measurement mode is the distance mentioned at step S2. Further, when the high speed measurement result Sh is set as the radar detection result, the distance Lh constituting a measurement value of the high speed measurement mode is the distance mentioned at step S2.

Meanwhile, the plural FFT mode method including the high speed/low speed FFT mode method of the invention mentioned above is applicable not only to the system of the constitution of Fig. 1 and Fig. 4 but also to apparatus and systems having various constitutions.

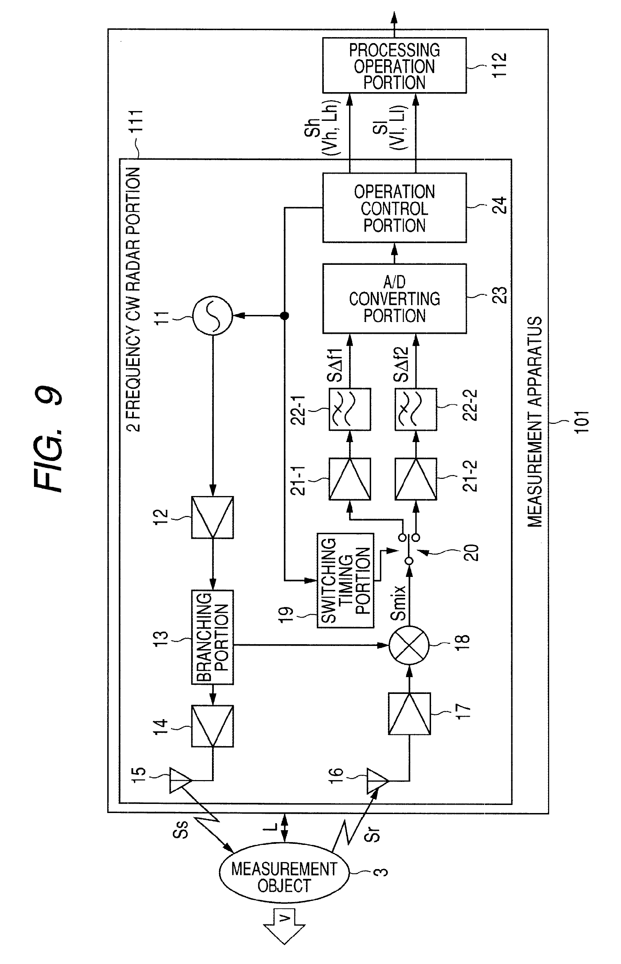

Further, here, the system expresses a total of an apparatus constituted by a plurality of processing apparatus or processing portions. In other words, the system of Fig. 4 can be regarded as one measuring apparatus 101 as shown by Fig. 9. That is, the measuring apparatus 101 of an example of Fig. 9 is one apparatus comprising a 2 frequency CW radar portion 111 as one processing portion in correspondence with the 2 frequency CW radar 1, and a processing portion 112 as one processing portion in correspondence with the processing operation apparatus 2.

Further, although in the above-described example, the 2 frequency CW radar 1 measures only the relative speed v and the distance L of the measurement object 3, the 2 frequency CW radar 1 may measure other physical amount, for example, an angle of the measurement object 3 or the like. Also a method of measuring the angle in this case is not particularly limited but, for example, by constituting the antenna portion 16 for receiving of Fig. 4 by two antennas, there can also be adopted a method of calculating the angle by using an amplitude ratio of a sum to a difference of the receiving signals of the two antennas, that is, a so-to-speak monopulse system.

The receiving signal utilized in the monopulse system in this case is a signal constituted by reflecting a transmitting signal by the measurement object and a signal including the Doppler frequency $\Delta f$. Further, the angle is calculated by the Doppler frequency $\Delta f$ per se or an amount based thereon (for example, a phase of the Doppler signal or the like). Therefore, the frequency analyzing processing of FFT or the like is executed similar to the 2 frequency CW system in order to extract the Doppler frequency $\Delta f$ per se or the amount based thereon (for example, the phase of the Doppler signal or the like). Therefore, by simply executing the measurement processing by the monopulse system of the background art, there poses the problem described above, that is, the problem that it is difficult to make the response speed and the accuracy compatible with each other.

Further speaking, the system of receiving the signal constituted by reflecting the transmitting signal by the measurement object as the receiving signal and measuring the measurement object by using the Doppler frequency $\Delta f$ per se of the receiving signal or the amount based thereon (for example, the phase of the Doppler signal or the like), that is, the total of the measurement apparatus of the background art of the Doppler system poses the problem described above, that is, the problem that it is difficult to make the response speed and the accuracy compatible with each other.

In this case, such a measurement apparatus of the Doppler system can be applied with the plural FFT mode method including the high speed/low speed FFT mode method of the invention mentioned above and the measuring apparatus applied with the plural FFT mode method of the invention can solve the problem quite similar to the 2 frequency CW radar 1 mentioned above. That is, the measurement apparatus applied with the invention is not limited to the above-described example but can take various modes.

Meanwhile, although the series of processing mentioned above (or processing of a portion thereof) can be executed by a hardware, the series of processing can also be executed by a software.

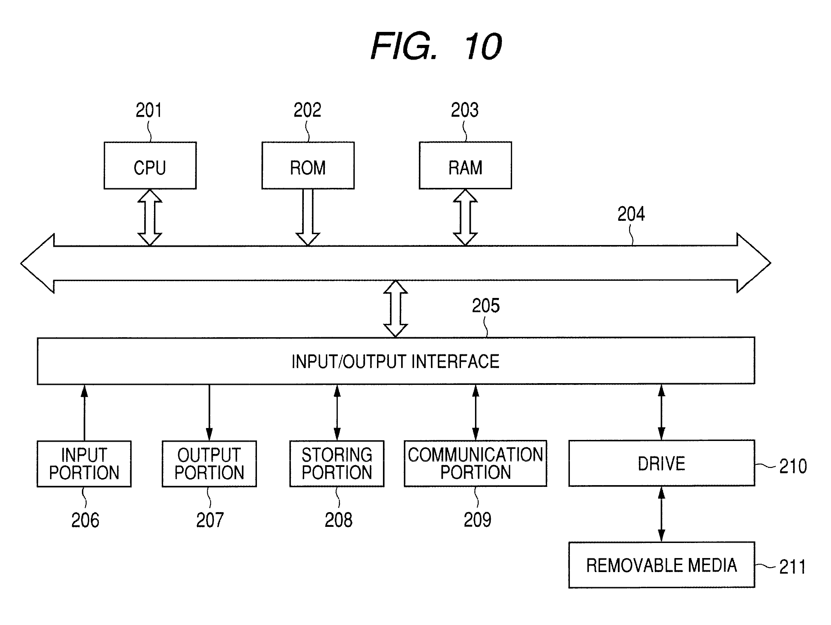

In this case, the apparatus for executing the series of processings (system defined as described above), or a portion thereof can be constituted by a computer as shown by Fig. 10.

In Fig. 10, CPU (Central Processing Unit) 201 executes various processings in accordance with a program recorded to ROM (Read Only Memory) 202, or a program loaded from a storing portion 208 to RAM (Random Access Memory) 203. RAM 203 is also pertinently stored with a data or the like necessary for CPU 201 to execute various processings.

CPU 201, ROM 202 and RAM 203 are connected to each other by way of a bus 204. The bus 204 is also connected with an input/output interface 205.

The input/output interface 205 is connected with an input portion 206 comprising a keyboard, a mouse or the like, an output portion 207 comprising a display or the like, the storing portion 208 constituted by a hard disk or the like, and a communication portion 209 constituted by a modem, a terminal adapter and the like. The communication portion 209 executes a communication processing with other apparatus by way of a network including the internet. Furthermore, the communication portion 209 also executes transmitting/receiving processings of the transmitting signal Ss and the receiving signal Sr for measuring the measurement object 3 mentioned in Fig. 1 and the like as necessary.

The input/output interface 205 is also connected with a drive 210 as necessary, pertinently mounted with removable media 211 comprising a magnetic disk, an optical disk, an optomagnetic disk, or a semiconductor memory or the like, and a computer program read therefrom is installed to the storing portion 208 as necessary.

When a series of processings are executed by a software, a computer program is installed from a network or a record medium to a computer integrated with a program constituting the software at an exclusive hardware, or, for example, a general purpose personal computer preferable for executing various functions by installing various programs.

As shown by Fig. 10, the record medium including the program is not only constituted by the removable medium (package media) 211 comprising a magnetic disk (including floppy disk), an optical disk (CD-ROM (Compact Disk-Read Only Memory), DVD (Digital Versatile Disk)), an optomagnetic disk (including MD (Mini-Disk)) or a semiconductor memory or the like, recorded with a program and distributed for providing a program to a user separately from an apparatus main body but also constituted by ROM 202 recorded with a program, a hard disk included in the storing portion 208 or the like provided to the user in a state of being previously integrated to the apparatus main body.

Further, in the specification, steps of describing a program recorded in a record medium include not only processings executed time-sequentially in accordance with an order thereof but also processings executed in parallel or individually although not necessarily processed time-sequentially.

[Drawings]

[Fig. 1]

1    2 frequency CW radar
2    processing operation apparatus
3    measurement object

[Fig. 2]

    time

[Fig. 3]

    time

[Fig. 4]

1    2 frequency CW radar
2    processing operation apparatus
3    measurement object
13    branching portion
19    switching timing portion
23    A/D converting portion
24    operation control portion

[Fig. 6]

24    operation control portion
51    control portion
52    data acquiring/holding portion

| 53 | high speed measurement mode measurement processing portion |
|---|---|
| 61 | high speed FFT portion |
| 62 | high speed speed/distance operation portion |
| 54 | low speed measurement mode measurement processing portion |
| 71 | low speed FFT portion |
| 72 | low speed speed/distance operation portion |

[Fig. 7]

| 54 | low speed measurement mode measurement processing portion |
|---|---|
| 52 | data acquiring/holding portion |
| 53 | high speed measurement mode measurement processing portion |

time
time
time

[Fig. 8]

start processing of processing operation apparatus

| S1 | initially set radar detection result to low speed measurement result Sl |
|---|---|
| S2 | relative speed equal to or faster than threshold? |
| S3 | result set radar detection result to low speed measurement S1 |
| S4 | set radar detection result to high speed measurement result Sh |
| S5 | radar detection result corrected? |
| S6 | correct radar detection result by utilizing low speed measurement result Sl |
| S7 | execute predetermined processing operation by using radar detection result |
| S8 | processing is selected to finish? |

finish processing

[Fig. 9]

| 3 | measurement object |
|---|---|
| 13 | branching portion |
| 19 | switching timing portion |
| 23 | A/D converting portion |
| 24 | operation control portion |
| 101 | measurement apparatus |
| 111 | 2 frequency CW radar portion |
| 112 | processing operation portion |

[Fig. 10]

| 205 | input/output interface |
|---|---|
| 206 | input portion |
| 207 | output portion |
| 208 | storing portion |
| 209 | communication portion |
| 210 | drive |
| 211 | removable media |

**Claims**

1.  A measurement system including a measuring apparatus for measuring an object by a Doppler system using a Doppler signal with regard to a reflecting signal of a transmitting signal by the object, and a processing apparatus for executing a predetermined processing by using a measurement result of the measuring apparatus, **characterized in that**
the measuring apparatus executes a frequency analysis for a sample data sampled from the reflecting signal and includes a plurality of measurement modes in which sample time periods of sampling the sample data from the reflecting signal differ from each other as measurement modes for measuring the object by the Doppler system by using a result of the frequency analysis and executes respective measurement processings of the plurality of measurement modes independently from each other and in parallel with each other; and
the processing apparatus executes the predetermined processing by selecting a predetermined measurement mode from the plurality of measurement modes and using the measurement result of the measuring apparatus by the selected measurement mode.

2. A measuring method of a measuring system including a measuring apparatus for measuring an object by a Doppler system using a Doppler signal with regard to a reflecting signal of a transmitting signal by the object, and a processing apparatus for executing a predetermined processing by using a measurement result of the measuring apparatus;
wherein the measuring apparatus executes a frequency analysis for a sample data sampled from the reflecting signal and includes a plurality of measurement modes in which sample time periods of sampling the sample data from the reflecting signal differ from each other as measurement modes for measuring the object by the Doppler system by using a result of the frequency analysis and executes respective measurement processings of the plurality of measurement modes independently from each other and in parallel with each other; and
wherein the processing apparatus executes the predetermined processing by selecting a predetermined measurement mode from the plurality of measurement modes and using the measurement result of the measuring apparatus by the selected measurement mode.

3. A measuring apparatus for measuring an object by a Doppler system using a Doppler signal with regard to a reflecting signal of a transmitting signal by the object, the measuring apparatus comprising:

measurement processing means for executing a frequency analysis for a sample data sampled from the reflecting signal and includes a plurality of measurement modes in which sample time periods of sampling the sample data from the reflecting signal differ from each other as measurement modes for measuring the object by the Doppler system by using a result of the frequency analysis and executes respective measurement processings of the plurality of measurement modes independently from each other and in parallel with each other.

4. The measuring apparatus according to Claim 3,
wherein the measuring apparatus includes a first measurement mode in which the sample time period is a first time period and a second measurement mode in which the sample time period is a second time period longer than the first time period as the measurement modes.

5. A measuring method of a measuring apparatus for measuring an object by a Doppler system using a Doppler signal with regard to a reflecting signal of a transmitting signal by the object, **characterized in that**
the measuring apparatus executes a frequency analysis for a sample data sampled from the reflecting signal and includes a plurality of measurement modes in which sample time periods of sampling the sample data from the reflecting signal differ from each other as measurement modes for measuring the object by the Doppler system by using a result of the frequency analysis; and
the measuring method includes a step of executing respective measuring processings of the plurality of measurement modes independently from each other and in parallel with each other.

6. An information processing apparatus, **characterized by** acquiring a measurement result from a measuring apparatus for detecting a Doppler frequency or an amount based thereon by executing a frequency analysis for a sample data sampled from a reflecting signal of an object for a transmitting signal, including a plurality of measurement modes in which sample time periods of sampling the sample data from the reflecting signal differ from each other as measurement modes of measuring the object by using a detection result thereof and executing respective measuring processings of the plurality of measurement modes independently from each other and in parallel with each other and executing a predetermined processing by utilizing the measurement result;
wherein the predetermined processing is executed by selecting a predetermined measurement mode from the plurality of measurement modes and using the measurement result of the measuring apparatus by the selected measurement mode.

**7.** The information processing apparatus according to Claim 6;
wherein the measuring apparatus includes a first measurement mode in which a sample time period is a first time period and a second measurement mode in which the sample time period is a second time period longer than the first time period as the measurement modes; and
wherein the information processing apparatus utilizes the measurement result of the measuring apparatus by the first measurement mode when a processing requesting a predetermined response speed is executed and utilizes the measurement result of the measuring apparatus by the second measurement mode when the other processing is executed as the predetermined processing.

**8.** The information processing apparatus according to Claim 6;
wherein the measuring apparatus includes a first measurement mode in which a sample time period is a first time period and a second measurement mode in which the sample time period is a second time period longer than the first time period as the measurement modes; and
wherein the information processing apparatus at least executes a first processing of utilizing the measurement result of the measuring apparatus by the first measurement mode, and a second processing of correcting the measurement result of the measuring apparatus by the first measurement mode by utilizing the measurement result of the measuring apparatus by the second measurement mode as the predetermined processing.

**9.** An information processing method of an information processing apparatus, **characterized by** acquiring a measurement result from a measuring apparatus for detecting a Doppler frequency or an amount based thereon by executing a frequency analysis for a sample data sampled from a reflecting signal of an object for a transmitting signal, including a plurality of measurement modes in which sample time periods of sampling the sample data from the reflecting signal differ from each other as measurement modes for measuring the object by using a detection result thereof and executing respective measuring processings of the plurality of measurement modes independently from each other and in parallel with each other and executing a predetermined processing by utilizing the measurement result;
wherein the predetermined processing is executed by selecting a predetermined measurement mode from the plurality of measurement modes and using the measurement result of the measuring apparatus by the selected measurement mode.

EP 1 923 718 A1

## FIG. 1

MEASUREMENT OBJECT

2 FREQUENCY CW RADAR

PROCESSING OPERATION APPARATUS

Ss

L

Sr

V

Sh(Vh, Lh)

Sl(Vl, Ll)

3

1

2

# FIG. 2

SΔfh

SΔfl

TIME

TH

EP 1 923 718 A1

# FIG. 3

*FIG. 4*

FIG. 5

$S_{\Delta f1}$

$S_{\Delta f2}$

$S_{mix}$

# FIG. 6

CONTROL PORTION ~51

DATA ACQUIRING/HOLDING PORTION

53~ HIGH SPEED FFT PORTION 61

HIGH SPEED SPEED/DISTANCE OPERATION PORTION 62

HIGH SPEED MEASUREMENT MODE MEASUREMENT PROCESSING PORTION

Sh(Vh, Lh)

54~ LOW SPEED FFT PORTION 71

LOW SPEED SPEED/DISTANCE OPERATION PORTION 72

LOW SPEED MEASUREMENT MODE MEASUREMENT PROCESSING PORTION

Sl(Vl, Ll)

52

OPERATION CONTROL PORTION

24

EP 1 923 718 A1

# FIG. 7

# FIG. 8

START PROCESSING OF
PROCESSING OPERATION APPARATUS

INITIALLY SET RADAR DETECTION
RESULT TO LOW SPEED
MEASUREMENT RESULT Sl — S1

RELATIVE SPEED EQUAL TO OR
FASTER THAN THRESHOLD? — S2
NO

YES

SET RADAR DETECTION
RESULT TO LOW SPEED
MEASUREMENT RESULT Sl — S3

SET RADAR DETECTION RESULT TO
HIGH SPEED MEASUREMENT RESULT Sh — S4

RADAR DETECTION
RESULT CORRECTED? — S5
NO

YES

CORRECT RADAR DETECTION RESULT
BY UTILIZING LOW SPEED
MEASUREMENT RESULT Sl — S6

EXECUTE PREDETERMINED
PROCESSING OPERATION BY USING
RADAR DETECTION RESULT — S7

PROCESSING IS SELECTED TO FINISH? — S8
NO

YES

FINISH PROCESSING

FIG. 9

EP 1 923 718 A1

## FIG. 10

EP 1 923 718 A1

**European Patent Office**

## EUROPEAN SEARCH REPORT

Application Number

EP 07 12 0287

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 314 998 A (HITACHI LTD [JP]) 28 May 2003 (2003-05-28) * paragraphs [0010] - [0032]; figures 1-7 * | 1-9 | INV. G01S13/58 G01S13/93 G01S7/35 |
| X | EP 1 365 257 A (HITACHI LTD [JP]) 26 November 2003 (2003-11-26) * paragraphs [0035] - [0050]; figure 1 * | 1-9 | |
| A | US 5 400 032 A (ASBURY JIMMIE [US] ET AL) 21 March 1995 (1995-03-21) * column 18, lines 10-45; figure 6 * | 1-9 | |
| A | US 6 798 374 B1 (SMITH KIMBLE JON [US]) 28 September 2004 (2004-09-28) * the whole document * | 1-9 | |
| | | | TECHNICAL FIELDS SEARCHED (IPC) |
| | | | G01S |

The present search report has been drawn up for all claims

| Place of search | Date of completion of the search | Examiner |
|---|---|---|
| Munich | 22 February 2008 | FANJUL CAUDEVILLA, J |

EPO FORM 1503 03.82 (P04C01)

## ANNEX TO THE EUROPEAN SEARCH REPORT
## ON EUROPEAN PATENT APPLICATION NO.

EP 07 12 0287

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2008

| Patent document cited in search report | | Publication date | Patent family member(s) | | Publication date |
|---|---|---|---|---|---|
| EP 1314998 | A | 28-05-2003 | WO | 0218972 A1 | 07-03-2002 |
| | | | US | 7023376 B1 | 04-04-2006 |
| EP 1365257 | A | 26-11-2003 | DE | 60310477 T2 | 19-07-2007 |
| | | | JP | 3649704 B2 | 18-05-2005 |
| | | | JP | 2003329768 A | 19-11-2003 |
| | | | US | 2003210174 A1 | 13-11-2003 |
| US 5400032 | A | 21-03-1995 | US | 5510794 A | 23-04-1996 |
| US 6798374 | B1 | 28-09-2004 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3203600 B
- JP 2004069693 A